# EUROPÄISCHE PATENTSCHRIFT

(11) **EP 1 085 737 B1**
(45) Veröffentlichungstag und Bekanntmachung des Hinweises auf die Patenterteilung: **08.03.2006**
(21) Anmeldenummer: 00250255.7
(22) Anmeldetag: 27.07.2000
(51) Int. Cl.: H04M 17/00, H04Q 7/32, H04Q 7/38

(54) **Mobilfunkendgerät-Freischaltung**
Mobile radio terminal activation disconnection
Terminal radio mobile déconnexion

(30) Priorität: 10.08.1999 DE 19938089
(43) Veröffentlichungstag der Anmeldung: 21.03.2001
(73) Patentinhaber: Vodafone Holding GmbH, 40213 Düsseldorf (DE)
(72) Erfinder: Hedemann, Ralf, Dipl.-Ing., 40670 Meerbusch (DE)
(74) Vertreter: Meissner, Peter E.

(56) Entgegenhaltungen:
- EP-A- 0 750 438
- EP-A- 0 796 023
- WO-A-98/57511
- US-A- 5 444 764
- US-A- 5 864 757
- US-A- 5 940 773

## Beschreibung

Die Erfindung betrifft Verfahren und Vorrichtungen zur Freischaltung von nur mit einer Mobilfunkteilnehmer-Identifikationskarte oder Gruppe von Mobilfunkteilnehmer-Identifikationskarten verwendbaren Mobilfunkendgeräten für die Verwendung mit beliebigen Mobilfunkteilnehmer-Identifikationskarten unter vorgegebenen Bedingungen.

Unter GSM und anderen Standards sind grundsätzlich Mobilfunkteilnehmer-Identifikationskarten mit beliebigen Mobilfunkendgeräten verwendbar. Dies ermöglicht es, Mobilfunkverträge unabhängig von einem Kauf eines Mobilfunkendgerätes abzuschließen. Jedoch werden insbesondere im Prepaid-Karten-Bereich Mobilfunkendgeräte (Handys) und Mobüfunkteilnehmer-Identifikationskarten (SIM) häufig im Paket verkauft. Um getrennten Weiterverkauf des Mobilfunkendgerätes und der Mobilfunkteilnehmer-Identifikationskarte zu vermeiden, kann das Mobilfunkendgerät nur für die Verwendung mit dieser Mobilfunkteilnehmer-Identifikationskarte oder einer bestimmten, Gruppe von Mobilfunkteilnehmer-Identifikationskarten freigeschaltet sein, so daß es mittels anderer Mobilfunkteilnehmer-Identifikationskarten nicht kommunizieren kann. Aufgrund gesetzlicher Vorgaben ist es erforderlich, Mobilfunkendgeräte nach einer bestimmten Laufzeit und zwar dann, wenn die Quasi-Subventionierung zurückerwirtschaft wurde, für die Verwendung mit beliebigen Mobilfunkteilnehmer-Identifikationskarten freizuschalten. Bisher angedachte, dem Fachmann bekannte Lösungsansätze bestehen darin, das Mobilfunkendgerät durch einen Code für die Verwendung mit beliebigen Mobilfunkteilnehmer-Identifikationskarten nach einem Jahr freizuschalten. Dies ist einerseits hinsichtlich der Administration seitens des Mobilfunknetzbetreibers aufwendig und andererseits hinsichtlich der Übermittlung des Codes problematisch, da Versuche in Spanien gezeigt haben, daß die Codes nach einiger Zeit im Internet veröffentlicht werden, so daß bereits vor Ablauf des Jahres die Mobilfunkendgeräte von den Mobilfunkteilnehmern entsperrt (für die Verwendung mit beliebigen Mobilfunkteilnehmer-Identifikationskarten freigeschaltet) werden und mit Gewinn vorzeitig verkauft werden.

Zweck der vorliegenden Erfindung ist deshalb eine möglichst effiziente und maniputationssichere Freischaltung eines Mobilfunkteilnehmer-Endgerätes. Die Aufgabe wird durch die unabhängigen Ansprüche gelöst.

Durch die Überwachung der Gesprächszeiten abgehender (= für den Nutzer des Endgerätes gebührenpflichtiger) Gespräche erfolgt einerseits eine zuverlässige effiziente Freischaltung und andererseits (da kein Code erforderlich und vorzeitig eingebbar ist) eine hochwertige Manipulationssicherung. Andererseits erfolgt hochzuverlässig die Freischaltung innerhalb eines Jahres, da bei üblichen Mobilfunk-Prepaid-Karten, für welche das Verfahren verwendbar ist, die Gesprächsfreiminuten der Mobilfunkteilnehmer-Identifikationskarte nach einem Jahr verfallen und erfahrungsgemäß nahezu immer vor Ablauf des Jahres vertelefoniert werden. In den wenigen vorstellbaren Fällen, in welchen die Freiminuten nicht vor Ablauf vertelefoniert werden, wäre auf eine Beschwerde des Kunden hin eine Freischaltung des Endgerätes dadurch möglich, daß mit einem simulierten Reparaturbetrieb zusätzliche Gesprächsminuten virtuell erzeugt und damit eine Freischaltung im Mobilfunkendgerät ausgelöst wird.

Die Freischaltung erfolgt zweckmäßig im Mobilfunkendgerät selbst. Um eine Reparatur derartiger Mobilfunkendgeräte innerhalb der nicht allgemein freigeschalteten Zeit zu ermöglichen, ist es zweckmäßig, wenn das Mobilfunkendgerät so ausgebildet ist, daß es bei Nichtvorliegen einer eingefügten freigeschalteten Mobilfunkteilnehmer-Identifikationskarte prüft, ob an ihm ein Dongle anliegt, und in diesem Falle so arbeitet, als wäre eine Mobilfunkteilnehmer-Identifikationskarte, für die es freigeschaltet ist, eingeschoben. Alternativ ist auch ein Reparaturbetrieb mit einer freigeschalteten Mobilfunkteilnehmer-Identifikationskarte (der Gruppe) möglich.

Zweckmäßig erfolgt eine Freischaltung für Mobilfunkteilnehmer-Identifikationskarten mit bestimmten Ziffernfolgen in der Telefonnummer, beispielsweise mit bestimmten HLR.

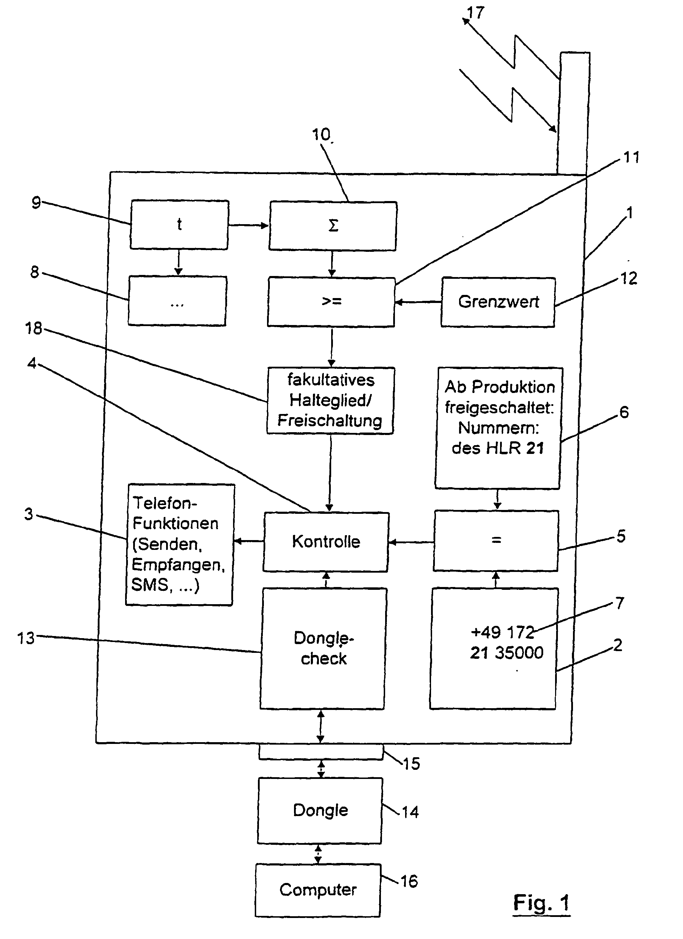

Weitere Merkmale und Vorteile der Erfindung ergeben sich aus den Ansprüchen und der nachfolgenden Beschreibung eines Ausführungsbeispiels anhand der Zeichnung. Dabei zeigt als einzige Figur
- Fig. 1: als Blockschaltbild ein erfindungsgemäßes Mobilfunkendgerätes mit einer eingeschobenen Mobilfunkteilnehmer-Identifikationskarte und einem für Reparaturzwecke an das Mobilfunkendgerät angeschlossenen Dongle.

Figur 1 zeigt ein Mobilfunkendgerät 1 (beispielsweise ein GSM- oder UMTS-Mobilfunkendgerät), in welches eine Mobilfunkteilnehmer-Identifikationskarte 2 (beispielsweise eine SIM-Karte) eingeschoben ist. Die Mobilfunkteilnehmer-Identifikationskarte hat hier die Telefonnummer +491722135000. Das Mobilfunkendgerät enthält Einrichtungen zur Überprüfung, ob es für die in es eingefügte Mobilfunkteilnehmer-Identifikationskarte 2 freigeschaltet ist, also ob man mit der Kombination des Mobilfunkendgerätes 1 mit der Mobilfunkteilnehmer-Identifikationskarte 2 telefonieren, insbesondere anrufen, darf.

Die zur Überprüfung der Freischaltung und zur Freischaltung vorgesehenen Komponenten im Mobilfunkendgerät sind schematisch dargestellt. Sie können im Mobilfunkendgerät insbesondere auch als.Software realisiert sein. Telefonfunktionen 3 (insbesondere Anrufen und/oder Annahme von Anrufen und/oder Kurzmitteilungen) des Mobilfunkendgerätes funktionieren nur, wenn eine Kontrolle 4 ergibt, daß sie funktionieren sollen. Die Kontrolle 4 erlaubt ein Ausführen der Telefonfunktionen 3, wenn ein Vergleich 5 der Telefonnummer (+491722135000) der in das Mobilfunkendgerät 1 eingeschobenen Mobilfunkteilnehmer-Identifikationskarte 2 mit einer im Mobilfunkendgerät gespeicherten Liste 6 von Mobilfunktelefonnummern (welche beispielsweise nur aufgrund ihres HLR - hier 21 - angegeben sein können) erfolgreich abläuft. In der Liste 6 kann beispielsweise nur eine Mobilfunkteilnehmer-Identifikationskarten-Nummer (Bezugszeichen 7 für +491722135000) vorgesehen sein; zweckmäßiger ist es, wenn mehrere Mobilfunkteilnehmer-Identifikationskarten 2 einer Gruppe im Mobilfunkendgerät 1 funktionieren, beispielsweise Mobilfunkteilnehmer-Identifikationskarten eines bestimmten HLR (hier HLR mit der Nummer 21 in +49 = Deutschland).

Die Kontrolle 4 läßt ferner die Telefonfunktionen 3 zu (unabhängig von einer Prüfung der Mobilfunkteilnehmer-Identifikationskarte 2 in 5, 6), wenn das Mobilfunkendgerät sich für beliebige Mobilfunkteilnehmer-Identifikationskarten freigeschaltet hat. Dies erfolgt erfindungsgemäß dadurch, daß von einem im Mobilfunkendgerät (hier auch für andere Funktionen 8) vorgesehenen Gesprächszeitenzähler (der die Gesprächsminuten vom Mobilfunkendgerät 1 abgehender Gespräche zählt) festgestellte (abgehende) Gesprächsminuten in einer Addiereinrichtung 10 addiert werden (zur Feststellung der Summe der Zeiten bisher abgehender Gespräche), wobei durch eine Vergleichsschaltung 11 die Summe bisher abgehender Gespräche mit einem im Endgerät vorgegebenen Grenzwert 12 von Gesprächsminuten verglichen wird und bei Überschreitung des Grenzwerts das Mobilfunkendgerät für beliebige Mobilfunkteilnehmer-Identifikationskarten freigeschaltet wird (wofür ein Halteglied 12 zum Fixieren nach einmaliger Freischaltung vorgesehen sein kann). Nach einer Freischaltung durch die Vergleichseinrichtung 11 läßt die Kontrolleinrichtung 4 Telefonfunktionen 3 mit beliebigen Mobilfunkteilnehmer-Identifikationskarten 2 zu. Die Freischaltungsüberprüfung durch den Vergleich 11 kann beispielsweise bei jedem Einschalten des Mobilfunkendgerätes oder bei jedem Einbuchen des Mobilfunkendgerätes etc. erfolgen.

Um eine Reparatur derartiger Mobilfunkendgeräte möglichst einfach zu ermöglichen, läßt die ODER-verknüpfende Kontrollschaltung 4 alle Telefonfunktionen 3 auch dann zu, wenn eine Dongle-Überprüfungseinrichtung 13 meldet, daß am Mobilfunkendgerät ein Dongle anliegt. Das Vorliegen eines Dongles kann beispielsweise mit aus dem PC-Bereich üblichen Routinen, wie Paßwortabfragen etc., erfolgen. Das Dongle 14 kann beispielsweise zwischen einem für den Anschluß an einem Computer vorgesehenen Port 15 des Endgerätes 1 und einem Computer 16 zwischengeschaltet sein. Alternativ ist eine Reparatur möglich unter Verwendung von Mobilfunkteilnehmer-Identifikationskarten 2, welche zur Gruppe freigeschalteter Mobilfunkteilnehmer-Identifikationskarten gehören, was jedoch aufgrund der Vielzahl der Gruppen etwas aufwendiger ist.

## Patentansprüche

1. Verfahren zur Freischaltung (11) eines nur mit einer bestimmten Mobilfunkteilnehmer-Identifikationskarte (7) oder Gruppe (6) von Mobilfunkteilnehmer-Identifikationskarten verwendbaren Mobilfunkendgerätes (1) für die Verwendung mit beliebigen Mobilfunkteilnehmer-Identifikationskarten,
wobei durch einen Gesprächszeitenzähler (10) die Gesprächszeiten (9) von von diesem Mobilfunkendgerät (1) abgehenden Gesprächen (17) erfaßt und mit einem Grenzwert (12) verglichen werden;
wobei eine Freischaltung des Mobilfunkendgerätes für beliebige Mobilfunkteilnehmer-Identifikationskarten bei Überschreitung (11) des Grenzwertes (12) erfolgt.

2. Verfahren nach Anspruch 1,
**dadurch gekennzeichnet,**
**daß** der Vergleich (11) jeweils beim Einschalten des Mobilfunkendgerätes (1) erfolgt.

3. Verfahren nach einem der vorhergehenden Ansprüche,
**dadurch gekennzeichnet,**
**daß** ein Mobilfunkendgerät (1) bei seiner Herstellung nur für die Verwendung mit bestimmten Mobilfunkteilnehmer-Identifikationskarten freigeschaltet ist.

4. Verfahren nach einem der vorhergehenden Ansprüche,
**dadurch gekennzeichnet,**
**daß** ein Mobilfunkendgerät (1) nur für die Verwendung mit Mobilfunkteilnehmer-Identifikationskarten (7) mit bestimmten Ziffern in ihre IMSI oder MSISDN freigeschaltet wird.

5. Verfahren nach einem der vorhergehenden Ansprüche,
**dadurch gekennzeichnet,**
**daß** ein Mobilfunkendgerät nur für die Verwendung mit Mobilfunkteilnehmer-Identifikationskarten bei seiner Herstellung freigeschaltet ist, welche aufgrund ihrer Identität (IMSI) oder Telefonnummer (MSISDN) in einem bestimmten HLR geführt werden.

6. Verfahren nach einem der vorhergehenden Ansprüche,
**dadurch gekennzeichnet,**
**daß** das Mobilfunkendgerät (1) mit Mobilfunkteilnehmer-Identifikationskarten, für die es nicht freigeschaltet ist oder noch nicht freigeschaltet ist, nicht senden kann.

7. Verfahren nach einem der vorhergehenden Ansprüche,
**dadurch gekennzeichnet,**
**daß** die Gesprächszeiten in Gesprächsminuten gemessen werden.

8. Verfahren nach einem der vorhergehenden Ansprüche,
**dadurch gekennzeichnet,**
**daß** im Mobilfunkendgerät die Gesprächszeiten gemessen werden.

9. Verfahren nach einem der vorhergehenden Ansprüche,
**dadurch gekennzeichnet,**
**daß** der Vergleich (11) von Gesprächszeiten des Mobilfunkendgerätes mit einem Grenzwert im Mobilfunkendgerät erfolgt.

10. Mobilfunkendgerät, insbesondere zur Durchführung nach einem der vorhergehenden Ansprüche,
welches zunächst nur für die Verwendung mit einer bestimmten Mobilfunkteilnehmer-Identifikationskarte (2) oder Gruppe (6) von Mobilfunkteilnehmer-Identifikationskarten freigeschaltet ist,
- mit einem Gesprächszeitenzähler (10) zum Addieren von Gesprächszeiten von vom Mobilfunkendgerät bisher abgehenden Gesprächen,
- mit einer Vergleichseinrichtung (11) zum Vergleich der Summe der addierten (10) Gesprächszeiten mit einem vorgegebenen Gesprächszeitengrenzwert (12),
- mit einer Freischalteeinrichtung (11,18) zum Freischalten des Mobilfunkendgerätes (1) für beliebige Mobilfunkteilnehmerldentifikationskarten, welche (7) so ausgebildet ist, daß diese Freischaltung erfolgt, wenn der Vergleich (11) der bisherigen Gesprächszeiten von vom Mobilfunkendgerät (1) abgehenden Gesprächen mit einem Grenzwert (12) die Überschreitung des Grenzwertes (12) anzeigt.

11. Mobilfunkendgerät nach Anspruch 10,
**dadurch gekennzeichnet,**
**daß** die Vergleichseinrichtung (11) so ausgebildet ist, daß ein Vergleich jeweils beim Einschalten des Mobilfunkendgerätes und/oder beim Einbuchen des Mobilfunkendgerätes in ein Mobilfunknetz erfolgt.

12. Mobilfunkendgerät nach Anspruch 10 oder 11,
**dadurch gekennzeichnet,**
**daß** es bei seiner Herstellung nur für die Verwendung mit bestimmten Mobilfunkteilnehmer-Identifikationskarten freigeschaltet ist.

13. Mobilfunkendgerät nach einem der Ansprche 10 bis 12,
**dadurch gekennzeichnet,**
**daß** es bei seiner Herstellung nur für die Verwendung mit Mobilfunkteilnehmer-Identifikationskarten mit bestimmten Ziffern in ihrer Identität (IMSI) oder Telefonnummer (MSISDN) freigeschaltet ist.

14. Mobilfunkendgerät nach Anspruch 13,
**dadurch gekennzeichnet,**
**daß** es nur für Mobilfunkteilnehmer-Identifikationskarten freigeschaltet ist, die in einem bestimmten HLR verwaltet werden.

15. Mobilfunkendgerät nach einem der Ansprüche 10 bis 14,
**dadurch gekennzeichnet,**
**daß** es mit Mobilfunkteilnehmer-Identifikationskarten, für die es nicht freigeschaltet ist, zumindest nicht senden kann.

## Claims

1. A method of activating (11) a mobile radio terminal (1), which is only usable with a specified mobile radio subscriber identification card (7) or group (6) of mobile radio subscriber identification cards, for use with any mobile radio subscriber identification card, wherein the call times (9) of outgoing calls (17) from this mobile radio terminal (1) are logged by a call time counter (10) and compared with a limit value (12), wherein the mobile radio terminal is activated for any mobile radio subscriber identification card when the limit value (12) is exceeded (11).

2. A method according to claim 1, **characterised in that** the comparison (11) is carried out each time the mobile radio terminal (1) is switched on.

3. A method according to any one of the preceding claims, **characterised in that** a mobile radio terminal (1) is activated upon manufacture only for use with specified mobile radio subscriber identification cards.

4. A method according to any one of the preceding claims, **characterised in that** a mobile radio terminal (1) is activated only for use with mobile radio subscriber identification cards (7) with specified digits in their IMSI or MSISDN.

5. A method according to any one of the preceding claims, **characterised in that** a mobile radio terminal is activated upon manufacture only for use with mobile radio subscriber identification cards which are registered in a specified HLR on the basis of their identity (IMSI) or telephone number (MSISDN).

6. A method according to any one of the preceding claims, **characterised in that** the mobile radio terminal (1) cannot transmit with mobile radio subscriber identification cards for which it has not been activated or has not yet been activated.

7. A method according to any one of the preceding claims, **characterised in that** the call times are measured in call minutes.

8. A method according to any one of the preceding claims, **characterised in that** the call times are measured in the mobile radio terminal.

9. A method according to any one of the preceding claims, **characterised in that** the comparison (11) between call times from the mobile radio terminal and a limit value is carried out in the mobile radio terminal.

10. A mobile radio terminal, in particular for proceeding according to any one of the preceding claims, which is initially activated only for use with a specified mobile radio subscriber identification card (2) or group (6) of mobile radio subscriber identification cards,
- with a call time counter (10) for adding up call times of previous outgoing calls from the mobile radio terminal,
- with a comparison means (11) for comparing the sum of the added-up (10) call times with a predetermined call-time limit value (12),
- with an activation means (11, 18) for activating the mobile radio terminal (1) for any mobile radio subscriber identification card, which (7) is formed so that this activation takes place when the comparison (11) between previous call times of outgoing calls from the mobile radio terminal (1) and a limit value (12) indicates that the limit value (12) has been exceeded.

11. A mobile radio terminal according to claim 10, **characterised in that** the comparison means (11) is formed so that a comparison is made each time the mobile radio terminal is switched on and/or each time the mobile radio terminal accesses a mobile radio network.

12. A mobile radio terminal according to claim 10 or 11, **characterised in that** it is activated upon manufacture only for use with specified mobile radio subscriber identification cards.

13. A mobile radio terminal according to any one of claims 10 to 12, **characterised in that** it is activated upon manufacture only for use with mobile radio subscriber identification cards with specified digits in their identity (IMSI) or telephone number (MSISDN).

14. A mobile radio terminal according to claim 13, **characterised in that** it is activated only for mobile radio subscriber identification cards which are registered in a specified HLR.

15. A mobile radio terminal according to any one of claims 10 to 14, **characterised in that** it at least cannot transmit with mobile radio subscriber identification cards for which it has not been activated.

## Revendications

1. Procédé pour le déblocage (11) d'un téléphone mobile (1) pouvant être utilisé uniquement avec une carte d'identification d'abonné (7) déterminée ou une catégorie (6) de cartes d'identification d'abonné pour une utilisation avec n'importe quelles cartes d'identification d'abonné, les temps de communication (9) de communications (17) émises par ce téléphone mobile (1) pouvant être enregistrés par l'intermédiaire d'un compteur de temps de communication (10) et comparés à une valeur limite (12),
dans lequel un déblocage du téléphone mobile pour n'importe quelles cartes d'identification d'abonné a lieu en cas de dépassement (11) de la valeur limite (12).

2. Procédé selon la revendication 1,
**caractérisé en ce que** la comparaison (11) a lieu à chaque fois que l'on allume le téléphone mobile (1).

3. Procédé selon l'une des revendications précédentes,
**caractérisé en ce qu'**un téléphone mobile (1) lors de sa fabrication n'est activé que pour une utilisation avec des cartes d'identification d'abonné déterminées.

4. Procédé selon l'une des revendications précédentes,
**caractérisé en ce qu'**un téléphone mobile (1) n'est activé que pour une utilisation avec des cartes d'identification d'abonné (7) comportant des chiffres déterminés dans leur numéro IMSI ou RNIS.

5. Procédé selon l'une des revendications précédentes,
**caractérisé en ce qu'**un téléphone mobile n'est activé lors de sa fabrication que pour une utilisation avec des cartes d'identification d'abonné qui, en raison de leur identité (IMSI) ou de leur numéro de téléphone (RNIS), sont gérées dans un enregistreur de localisation nominal particulier.

6. Procédé selon l'une des revendications précédentes,
**caractérisé en ce que** le téléphone mobile (1) ne peut pas émettre avec des cartes d'identification d'abonné pour lesquelles il n'est pas ou pas encore débloqué.

7. Procédé selon l'une des revendications précédentes,
**caractérisé en ce que** les temps de communication sont mesurés en minutes de communication.

8. Procédé selon l'une des revendications précédentes,
**caractérisé en ce que** les temps de communication sont mesurés dans le téléphone mobile.

9. Procédé selon l'une des revendications précédentes,
**caractérisé en ce que** la comparaison (11) des temps de communication du téléphone mobile à une valeur limite a lieu dans le téléphone mobile.

10. Téléphone mobile, en particulier pour la mise en oeuvre de l'une des revendications précédentes,
lequel, dans un premier temps, n'est activé que pour une utilisation avec une carte d'identification d'abonné déterminée (2) ou une catégorie (6) de cartes d'identification d'abonné, comprenant :
- un compteur de temps de communication (10) pour totaliser les temps de communication des communications émises jusqu'à présent par le téléphone mobile,
- un dispositif de comparaison (11) pour comparer la somme des temps de communication additionnés (10) à une valeur limite de temps de communication prédéterminée (12),
- un dispositif de déblocage (11, 18) pour débloquer le téléphone mobile (1) pour n'importe quelles cartes d'identification d'abonné, lequel (7) est réalisé de telle façon que ce déblocage a lieu lorsque la comparaison (11) des temps de communication actuels des communications émises par le téléphone mobile (1) à une valeur limite (12) indique un dépassement de la valeur limite (12).

11. Téléphone mobile selon la revendication 10,
**caractérisé en ce que** le dispositif de comparaison (11) est réalisé de telle façon qu'une comparaison a lieu à chaque fois que l'on allume le téléphone mobile et/ou que l'on utilise le téléphone mobile dans un réseau de téléphonie mobile.

12. Téléphone mobile selon la revendication 10 ou 11,
**caractérisé en ce qu'**il n'est activé lors de sa fabrication que pour une utilisation avec des cartes d'identification d'abonné déterminées.

13. Téléphone mobile selon l'une des revendications 10 à 12,
**caractérisé en ce qu'**il n'est activé lors de sa fabrication que pour une utilisation avec des cartes d'identification d'abonné comportant des chiffres déterminés dans leur numéro d'identité (IMSI) ou dans leur numéro de téléphone (RNIS).

14. Téléphone mobile selon la revendication 13,
**caractérisé en ce qu'**il n'est activé que pour des cartes d'identification d'abonné qui sont gérées dans un enregistreur de localisation nominal déterminé.

15. Téléphone mobile selon l'une des revendications 10 à 14,
**caractérisé en ce que**, au moins, il ne peut pas émettre avec des cartes d'identification d'abonné pour lesquelles il n'est pas activé.
